# FASCICULE DE BREVET EUROPEEN

(11) **EP 4 460 430 B1**
(45) Date de publication et mention de la délivrance du brevet: **01.07.2026**
(21) Numéro de dépôt: 23700480.9
(22) Date de dépôt: 09.01.2023
(51) Int. Cl.: B60H 1/00

(54) **OPTIMISATION DE LA GESTION D'UNE POMPE À CHALEUR DE VÉHICULE AUTOMOBILE**
OPTIMIERUNG DES BETRIEBS EINER KRAFTFAHRZEUGWÄRMEPUMPE
OPTIMIZATION OF THE MANAGEMENT OF A MOTOR VEHICLE HEAT PUMP

(30) Priorité: 09.01.2022 FR 2200130
(43) Date de publication de la demande: 13.11.2024
(73) Titulaire: Valeo Electrification, 95892 Cergy Pontoise (FR)
(72) Inventeur: GESSIER, Bertrand, 78320 Le Mesnil-Saint-Denis (FR); COTTET, Richard, 78320 Le Mesnil-Saint-Denis (FR); PLA MORENO, Benjamin, 78320 Le Mesnil-Saint-Denis (FR)
(74) Mandataire: Valeo Powertrain Systems
(86) Numéro de dépôt international: PCT/EP2023/050275
(87) Numéro de publication internationale: WO 2023/131695

(56) Documents cités:
- CN-A- 112 744 050
- FR-A1- 3 097 471
- US-A1- 2021 239 479
- US-A1- 2021 394 580

## Description

Le domaine de la présente invention est relatif aux véhicules comprenant un système de traction du véhicule, un dispositif de stockage d'énergie électrique, et un dispositif de chauffage et/ou de refroidissement, de type pompe à chaleur, pour chauffer et/ou refroidir le système de traction du véhicule, le dispositif de stockage d'énergie électrique et l'habitacle du véhicule, le dispositif de chauffage et/ou refroidissement étant apte à transférer des calories depuis et/ou vers chacun parmi le système de traction du véhicule, le dispositif de stockage d'énergie électrique, l'habitacle du véhicule et l'environnement extérieur au véhicule. Typiquement, le système de traction est électrique, et le dispositif de stockage d'énergie électrique comprenant une ou plusieurs batteries électriques.

Ces véhicules sont équipés de calculateur pour calculer des valeurs souhaitées de température des différentes composants et pour, après un calcul d'optimisation des pertes thermiques sur un trajet calculé, déterminer, à un instant t :
- une sélection d'un mode d'utilisation du dispositif de chauffage et/ou de refroidissement parmi tous les modes possibles,
- un niveau de puissance de chauffage ou de refroidissement pour le dispositif de chauffage et/ou de refroidissement .

Le document US 2021/394580 A1 divulgue un procédé connu de gestion thermique d'un véhicule. L'invention vise notamment à réduire les temps de calcul.

A cet effet, un aspect de l'invention concerne un procédé de gestion thermique d'un véhicule du type comprenant un système de traction du véhicule, un dispositif de stockage d'énergie électrique, et un dispositif de chauffage et/ou de refroidissement, de type pompe à chaleur, pour chauffer et/ou refroidir le système de traction du véhicule, le dispositif de stockage d'énergie électrique et l'habitacle du véhicule, le dispositif de chauffage et/ou refroidissement étant apte à transférer des calories depuis et/ou vers chacun parmi le système de traction du véhicule, le dispositif de stockage d'énergie électrique, l'habitacle du véhicule et l'environnement extérieur au véhicule,
ledit procédé de gestion thermique reçoit en entrée, au moins :
   - une information de trajet du véhicule, le trajet étant discrétisé en tronçons longs et, pour chaque tronçon long, une information représentative d'une vitesse moyenne du véhicule et une information représentative d'une inclinaison moyenne de route,
   - une information représentative d'une puissance moyenne de traction du véhicule sur chacun desdits tronçons longs de trajet,
   - une information représentative d'au moins une condition météorologique sur chacun desdits tronçons longs de trajet,
   - une information représentative d'au moins une température d'habitacle souhaitée sur chacun desdits tronçons longs de trajet,
ledit procédé de gestion thermique comprenant plusieurs sous-procédés de calcul :
   - un sous-procédé de calcul dit de supervision à long terme sur au moins plusieurs desdits tronçons longs, de préférence sur l'ensemble du trajet, lequel sous-procédé de supervision :
      o utilise en entrée, pour chacun desdits tronçons longs de trajet: les informations de vitesses moyennes prévues, d'inclinaisons moyennes de route prévues, de puissances moyennes de traction du véhicule prévues, l'au moins une condition météorologique déterminée, l'au moins une température d'habitacle souhaitée,
      o utilise un modèle thermique dans lequel pour chacun desdits tronçons longs de trajet, le système de traction du véhicule, le dispositif de stockage d'énergie électrique, l'habitacle du véhicule et l'environnement extérieur au véhicule se voient attribués une température moyenne et une capacité thermique, et modèle thermique dans lequel les calories peuvent être transférées entre eux par le dispositif de chauffage et/ou refroidissement,
      o effectue un calcul d'optimisation simplifié des pertes thermiques de tous les dispositifs sur lesdits plusieurs tronçons longs de trajet, de préférence sur l'ensemble du trajet, lequel calcul minimise la somme des pertes thermiques du dispositif de stockage d'énergie électrique, de préférence seulement les pertes thermiques du dispositif de stockage d'énergie électrique,
      o et fournit en sortie, pour chacun desdits plusieurs tronçons longs de trajet:
         ▪ une information représentative d'une valeur cible de température moyenne et/ou de variation moyenne de température du dispositif de stockage d'énergie électrique pour chacun desdits tronçons longs,
         ▪ une information de présélection de certains modes d'utilisation du dispositif de chauffage et/ou de refroidissement parmi tous les modes possibles,
         ▪ une information représentative d'une température moyenne du système de traction du véhicule, du dispositif de stockage d'énergie électrique et de l'habitacle du véhicule, et
         ▪ une information représentative d'un état de charge de la batterie,
   - un sous-procédé de calcul dit de pilotage à court terme sur des tronçons courts de trajet, plus petit que lesdits tronçons longs, par exemple 10 fois plus petits :
      ∘ reçoit en entrée des informations représentatives de puissance moyenne de traction nécessaire sur chacun desdits tronçons courts, et des informations représentatives d'une vitesse moyenne du véhicule et/ou d'une variation de vitesse du véhicule sur chacun desdits tronçons courts,
      o utilise un modèle thermique dans lequel pour chacun desdits tronçons courts de trajet, le système de traction du véhicule, le dispositif de stockage d'énergie électrique, l'habitacle du véhicule et l'environnement extérieur au véhicule se voient attribués une information représentative d'une température moyenne et une information représentative d'une capacité thermique, et modèle thermique dans lequel les calories peuvent être transférées entre eux par le dispositif de chauffage et/ou refroidissement,
      o effectue un calcul d'optimisation des pertes thermiques sur lesdits plusieurs tronçons courts de trajet, lequel calcul minimise la somme des pertes thermiques du dispositif de stockage d'énergie électrique, de l'écart entre température du dispositif de stockage d'énergie électrique et points fixés de température du dispositif de stockage d'énergie électrique et de l'écart entre température de cabine et points fixés de température de cabine, en affectant à chacun de ces trois paramètres d'optimisation un coefficient respectif,
      o et fournit en sortie, pour chacun desdits tronçons courts de trajet
         ▪ une information de sélection d'un seul mode d'utilisation du dispositif de chauffage et/ou de refroidissement parmi tous les modes possibles,
         ▪ une information d'un niveau de puissance de chauffage ou de refroidissement pour le dispositif de chauffage et/ou de refroidissement .

Un tel procédé, par sa gestion des optimisations thermiques à deux niveaux différentes de finesse de modèle, permet de réduire le temps de calcul.

Le terme système de traction doit s'entendre de façon générique et s'entend d'une traction par l'avant ou l'arrière du véhicule.

Selon des modes particuliers de réalisation, le procédé comporte en outre l'une ou plusieurs des caractéristiques suivantes, prise(s) isolément ou selon toute combinaison techniquement possible :
- le procédé de gestion thermique comprend en outre un sous-procédé d'apprentissage machine pour corriger des dérives éventuelles du sous-procédé dit de supervision et /ou du sous-procédé dit de pilotage et de leurs modèles respectifs par rapport à des valeurs mesurées, de façon à corriger les modèles utilisés,
- le procédé dit de supervision est réitéré, par exemple si un écart a été trouvé entre des valeurs mesurées de température de l'un ou plusieurs parmi les températures du dispositif de stockage électrique, du système de traction du véhicule et de l'habitacle, et les valeurs cibles souhaitées, cet écart étant par exemple supérieur à une valeur prédéterminée respective,
- les longueurs desdits tronçons longs ne sont pas toutes identiques et/ou les longueurs desdits tronçons courts ne sont pas toutes identiques, ces longueurs étant par exemple calculées en distance parcourue ou en temps de parcours,
- le procédé de gestion thermique comprend un sous-procédé de commande d'actionneurs du dispositif de chauffage et/ou de refroidissement du véhicule ayant en entrée les sorties du sous-procédé de calcul dit de pilotage à court terme,
- le procédé de gestion thermique comprend un sous-procédé de calcul du trajet du véhicule, notamment en fonction d'informations de trafic, lequel discrétise le trajet en tronçons longs et fournit, pour chaque tronçon long, ladite information représentative d'une vitesse moyenne du véhicule et l' information représentative d' inclinaison moyenne de route,
- le procédé de gestion thermique comprend un sous-procédé de calcul de puissance pour le système de traction du véhicule, en fonction desdites informations de vitesses moyennes prévues sur chacun desdits tronçons longs de trajet et d'inclinaisons moyennes de route prévue sur chacun desdits tronçons longs de trajet, lequel fournit en sortie l'information représentative d'une puissance moyenne de traction du véhicule sur chacun desdits tronçons longs de trajet,
- le procédé de gestion thermique comprend un sous-procédé de détermination de l'information représentative d'au moins une condition météorologique sur chacun desdits tronçons longs de trajet,
- le procédé de gestion thermique comprend un sous-procédé de détermination de l'information représentative d'au moins une température d'habitacle souhaitée sur chacun desdits tronçons longs de trajet,
- le procédé de gestion thermique comprend un sous-procédé de calcul des informations représentatives de puissance moyenne de traction nécessaire sur chacun desdits tronçons courts, et des informations représentatives d'une vitesse moyenne du véhicule et/ou d'une variation de vitesse du véhicule sur chacun desdits tronçons courts

Un autre aspect de l'invention concerne un système de gestion thermique d'un véhicule, le véhicule étant du type comprenant un système de traction du véhicule et un dispositif de stockage d'énergie électrique, le système de gestion thermique comprenant un dispositif de chauffage et/ou de refroidissement, de type pompe à chaleur, et configuré pour chauffer et/ou refroidir le système de traction du véhicule, le dispositif de stockage d'énergie électrique et l'habitacle du véhicule, le dispositif de chauffage et/ou refroidissement étant apte, après installation dans le véhicule, à transférer des calories depuis et/ou vers chacun parmi le système de traction du véhicule, le dispositif de stockage d'énergie électrique, l'habitacle du véhicule et l'environnement extérieur au véhicule, ledit système de gestion thermique comprenant au moins une mémoire et au moins un calculateur, ladite au moins une mémoire comprenant des instructions de calcul pour mettre en œuvre le procédé de gestion thermique tel que décrit ci-dessus au moins en partie sur ledit au moins calculateur.

Selon un mode particulier de réalisation, le système de gestion thermique comprend au moins un capteur de température, le système étant configuré pour mesurer avec l'au moins un capteur de température la température de l'un ou plusieurs parmi les températures du dispositif de stockage électrique, du système de traction du véhicule et de l'habitacle, et pour transmettre ces informations de température audit au moins un calculateur.

Un autre aspect de l'invention concerne un véhicule comprend un système de traction du véhicule, un dispositif de stockage d'énergie électrique, et un système de gestion thermique tel que décrit ci-dessus.

Selon des modes particuliers de réalisation, le véhicule comporte en outre l'une ou plusieurs des caractéristiques suivantes, prise(s) isolément ou selon toute combinaison techniquement possible :
- le système de traction du véhicule étant au moins partiellement électrique, voire tout électrique ;
- le véhicule est de type automobile.

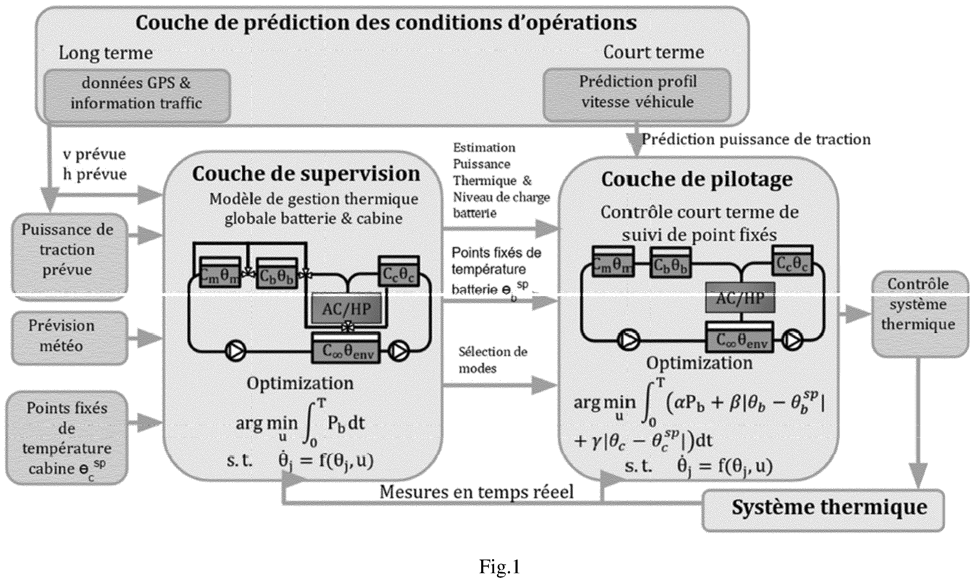

La [fig 1] est un schéma du procédé de calcul mise en œuvre par le système de gestion thermique du véhicule.

Selon cet exemple illustratif, le véhicule est du type à traction électrique et comprend à cet effet un système de traction du véhicule, par exemple tout électrique ou hybride. Le véhicule comporte en outre un dispositif de stockage d'énergie électrique, i.e. une batterie électrique, pour alimenter le système de traction du véhicule et le véhicule comporte également un système de gestion thermique.

Le véhicule est par exemple un véhicule automobile, de type par exemple automobile, camion, véhicule utilitaire, etc.

Le ssystème de gestion thermique du véhicule comprend un dispositif de chauffage et/ou de refroidissement, de type pompe à chaleur.

Le système de gestion thermique comprend aussi une partie de calcul comprenant ainsi qu'une ou plusieurs mémoires sur lesquelles sont stockées des commandes de calcul.

Le dispositif de chauffage et/ou de refroidissement est configuré pour chauffer et/ou refroidir le système de traction du véhicule, le dispositif de stockage d'énergie électrique et l'habitacle du véhicule.

Le dispositif de chauffage et/ou refroidissement est apte, après installation dans le véhicule, à transférer des calories depuis et/ou vers chacun parmi le système de traction du véhicule, le dispositif de stockage d'énergie électrique, l'habitacle du véhicule et l'environnement extérieur au véhicule.

Par ailleurs, le système de gestion thermique comprend au moins un capteur de température pour mesurer avec l'au moins un capteur de température la température de l'un ou plusieurs parmi les températures du dispositif de stockage électrique, du système de traction du véhicule et de l'habitacle, et pour transmettre ces informations de température audit au moins un calculateur.

Comme illustré, le système de contrôle du véhicule détermine par exemple sur le long terme, une vitesse prévue et une heure prévue en fonction des données GPS et de trafic. Le système en déduit une puissance de traction prévue à une heure donnée, ce qui constitue une donnée d'entrée de la couche de supervision, laquelle utilise un modèle de gestion thermique simplifié. D'autres données d'entrée sont par exemple les données météorologiques et surtout des points fixés de température cabine. Par exemple : 21°C dans l'habitacle.

La couche de supervision en déduit alors par exemple, sur différents tronçons du trajet, une estimation de charge thermique et de niveau de batterie, des points fixés de température batterie, par exemple 31°C sur le tronçon 1, 32°C sur le tronçon 2, 31°C à nouveau sur le tronçon 3, etc. , et la couche de supervision fournit aussi en sortie une sélection de modes de fonctionnement pour le système de gestion thermique.

S'ensuit alors des itérations de calcul à court terme sur les différents tronçons, par la couche de pilotage, laquelle utilise un modèle de gestion thermique plus détaillé.

A noter que la couche de pilotage reçoit, par le système de gestion global, pour chaque tronçon, des valeurs de puissance de traction nécessaire.

La présélection des modes de fonctionnement minimise grandement le temps de calcul au niveau de la couche de pilotage. La couche de pilotage détermine alors le mode de fonctionnement à sélectionner pour la mise en œuvre par le dispositif de chauffage et/ou de refroidissement. Chaque tronçon se voit ainsi attribué in fine un point cible de température cabine, un point cible de température batterie, et un mode de fonctionnement du dispositif de chauffage et/ou refroidissement du système de traction du véhicule, du dispositif de stockage d'énergie électrique et de l'habitacle du véhicule. Par ailleurs, comme visible sur le schéma, des boucles de mesure de température en temps réel peuvent permettre de corriger les données d'entrée.

## Revendications

1. Procédé de gestion thermique d'un véhicule du type comprenant un système de traction du véhicule, un dispositif de stockage d'énergie électrique, et un dispositif de chauffage et/ou de refroidissement, de type pompe à chaleur, pour chauffer et/ou refroidir le système de traction du véhicule, le dispositif de stockage d'énergie électrique et l'habitacle du véhicule, le dispositif de chauffage et/ou refroidissement étant apte à transférer des calories depuis et/ou vers chacun parmi le système de traction du véhicule, le dispositif de stockage d'énergie électrique, l'habitacle du véhicule et l'environnement extérieur au véhicule, ledit procédé de gestion thermique reçoit en entrée, au moins :
- une information de trajet du véhicule, le trajet étant discrétisé en tronçons longs et, pour chaque tronçon long, une information représentative d'une vitesse moyenne du véhicule et une information représentative d'une inclinaison moyenne de route,
- une information représentative d'une puissance moyenne de traction du véhicule sur chacun desdits tronçons longs de trajet,
- une information représentative d'au moins une condition météorologique sur chacun desdits tronçons longs de trajet,
- une information représentative d'au moins une température d'habitacle souhaitée sur chacun desdits tronçons longs de trajet, ledit procédé de gestion thermique comprenant plusieurs sous-procédés de calcul, le procédé de gestion thermique étant **caractérisé en ce que** lesdits sous-procédés de calcul comprennent :
- un sous-procédé de calcul dit de supervision à long terme sur au moins plusieurs desdits tronçons longs, de préférence sur l'ensemble du trajet, lequel sous-procédé de supervision :
o utilise en entrée, pour chacun desdits tronçons longs de trajet: les informations de vitesses moyennes prévues, d'inclinaisons moyennes de route prévues, de puissances moyennes de traction du véhicule prévues, l'au moins une condition météorologique déterminée, l'au moins une température d'habitacle souhaitée,
o utilise un modèle thermique dans lequel pour chacun desdits tronçons longs de trajet, le système de traction du véhicule, le dispositif de stockage d'énergie électrique, l'habitacle du véhicule et l'environnement extérieur au véhicule se voient attribués une température moyenne et une capacité thermique, et modèle thermique dans lequel les calories peuvent être transférées entre eux par le dispositif de chauffage et/ou refroidissement,
o effectue un calcul d'optimisation simplifié des pertes thermiques de tous les dispositifs sur lesdits plusieurs tronçons longs de trajet, de préférence sur l'ensemble du trajet, lequel calcul minimise la somme des pertes thermiques du dispositif de stockage d'énergie électrique, de préférence seulement les pertes thermiques du dispositif de stockage d'énergie électrique,
o et fournit en sortie, pour chacun desdits plusieurs tronçons longs de trajet:
▪ une information représentative d'une valeur cible de température moyenne et/ou de variation moyenne de température du dispositif de stockage d'énergie électrique pour chacun desdits tronçons longs,
▪ une information de présélection de certains modes d'utilisation du dispositif de chauffage et/ou de refroidissement parmi tous les modes possibles,
▪ une information représentative d'une température moyenne du système de traction du véhicule, du dispositif de stockage d'énergie électrique et de l'habitacle du véhicule, et
▪ une information représentative d'un état de charge de la batterie,
- un sous-procédé de calcul dit de pilotage à court terme sur des tronçons courts de trajet, plus petit que lesdits tronçons longs, par exemple 10 fois plus petits :
o reçoit en entrée des informations représentatives de puissance moyenne de traction nécessaire sur chacun desdits tronçons courts, et des informations représentatives d'une vitesse moyenne du véhicule et/ou d'une variation de vitesse du véhicule sur chacun desdits tronçons courts,
o utilise un modèle thermique dans lequel pour chacun desdits tronçons courts de trajet, le système de traction du véhicule, le dispositif de stockage d'énergie électrique, l'habitacle du véhicule et l'environnement extérieur au véhicule se voient attribués une information représentative d'une température moyenne et une information représentative d'une capacité thermique, et modèle thermique dans lequel les calories peuvent être transférées entre eux par le dispositif de chauffage et/ou refroidissement,
o effectue un calcul d'optimisation des pertes thermiques sur lesdits plusieurs tronçons courts de trajet, lequel calcul minimise la somme des pertes thermiques du dispositif de stockage d'énergie électrique, de l'écart entre température du dispositif de stockage d'énergie électrique et points fixés de température du dispositif de stockage d'énergie électrique et de l'écart entre température de cabine et points fixés de température de cabine, en affectant à chacun de ces trois paramètres d'optimisation un coefficient respectif,
o et fournit en sortie, pour chacun desdits tronçons courts de trajet
▪ une information de sélection d'un seul mode d'utilisation du dispositif de chauffage et/ou de refroidissement parmi tous les modes possibles,
▪ une information d'un niveau de puissance de chauffage ou de refroidissement pour le dispositif de chauffage et/ou de refroidissement .

2. Procédé selon la revendication 1, comprenant en outre un sous-procédé d'apprentissage machine pour corriger des dérives éventuelles du sous-procédé dit de supervision et /ou du sous-procédé dit de pilotage et de leurs modèles respectifs par rapport à des valeurs mesurées, de façon à corriger les modèles utilisés.

3. Procédé selon la revendication 1 ou 2, dans lequel le procédé dit de supervision est réitéré, par exemple si un écart a été trouvé entre des valeurs mesurées de température de l'un ou plusieurs parmi les températures du dispositif de stockage électrique, du système de traction du véhicule et de l'habitacle, et les valeurs cibles souhaitées, cet écart étant par exemple supérieur à une valeur prédéterminée respective.

4. Procédé selon l'une quelconque des revendications précédentes, dans lesquels les longueurs desdits tronçons longs ne sont pas toutes identiques et/ou les longueurs desdits tronçons courts ne sont pas toutes identiques, ces longueurs étant par exemple calculées en distance parcourue ou en temps de parcours.

5. Procédé selon l'une quelconque des revendications précédentes, comprenant un sous-procédé de commande d'actionneurs du dispositif de chauffage et/ou de refroidissement du véhicule ayant en entrée les sorties du sous-procédé de calcul dit de pilotage à court terme.

6. Système de gestion thermique d'un véhicule, le véhicule étant du type comprenant un système de traction du véhicule et un dispositif de stockage d'énergie électrique, le système de gestion thermique comprenant un dispositif de chauffage et/ou de refroidissement, de type pompe à chaleur, et configuré pour chauffer et/ou refroidir le système de traction du véhicule, le dispositif de stockage d'énergie électrique et l'habitacle du véhicule, le dispositif de chauffage et/ou refroidissement étant apte, après installation dans le véhicule, à transférer des calories depuis et/ou vers chacun parmi le système de traction du véhicule, le dispositif de stockage d'énergie électrique, l'habitacle du véhicule et l'environnement extérieur au véhicule, ledit système de gestion thermique comprenant au moins une mémoire et au moins un calculateur, ladite au moins une mémoire comprenant des instructions de calcul pour mettre en œuvre le procédé de gestion thermique selon l'une quelconque des revendications précédentes sur ledit au moins un calculateur.

7. Système de gestion thermique selon la revendication précédente, comprenant au moins un capteur de température, le système tant configuré pour mesurer avec l'au moins un capteur de température la température de l'un ou plusieurs parmi les températures du dispositif de stockage électrique, du système de traction du véhicule et de l'habitacle, et pour transmettre ces informations de température audit au moins un calculateur.

8. Véhicule comprenant un système de traction du véhicule, un dispositif de stockage d'énergie électrique, et un système de gestion thermique selon la revendication 6 ou 7.

9. Véhicule selon la revendication précédente, le système de traction du véhicule étant au moins partiellement électrique, voire tout électrique.

10. Véhicule selon la revendication précédente, le véhicule étant de type automobile

## Patentansprüche

1. Verfahren zur thermischen Verwaltung eines Fahrzeugs des Typs, umfassend ein Antriebssystem des Fahrzeugs, eine elektrische Energiespeichervorrichtung und eine Heiz- und/oder Kühlvorrichtung vom Typ Wärmepumpe zum Heizen und/oder Kühlen des Antriebssystems des Fahrzeugs, der elektrischen Energiespeichervorrichtung und des Fahrzeuginnenraums, wobei die Heiz- und/oder Kühlvorrichtung geeignet ist, Kalorien von und/oder zu jedem unter dem Antriebssystem des Fahrzeugs, der elektrischen Energiespeichervorrichtung, dem Fahrzeuginnenraum und der Umgebung außerhalb des Fahrzeugs zu übertragen, wobei das thermische Verwaltungsverfahren als Eingabe mindestens erhält:
- eine Information über die Fahrzeugstrecke, wobei die Strecke in lange Abschnitte diskretisiert ist und für jeden langen Abschnitt eine Information, die eine durchschnittliche Geschwindigkeit des Fahrzeugs repräsentiert, und eine Information, die eine durchschnittliche Straßenneigung repräsentiert,
- eine Information, die eine durchschnittliche Antriebsleistung des Fahrzeugs auf jedem der langen Streckenabschnitte repräsentiert,
- eine Information, die mindestens eine Wetterbedingung auf jedem der langen Streckenabschnitte repräsentiert,
- eine Information, die mindestens eine gewünschte Innenraumtemperatur auf jedem der langen Streckenabschnitte repräsentiert, wobei das thermische Verwaltungsverfahren mehrere Berechnungsunterprozesse umfasst, wobei das thermische Verwaltungsverfahren **dadurch gekennzeichnet ist, dass** die Berechnungsunterprozesse umfassen:
- einen als langfristige Überwachung bezeichneten Berechnungsunterprozess über mindestens mehrere der langen Abschnitte, vorzugsweise über die gesamte Strecke, wobei der Überwachungsunterprozess:
- als Eingabe für jeden der langen Streckenabschnitte verwendet: die Informationen über erwartete durchschnittliche Geschwindigkeiten, erwartete durchschnittliche Straßenneigungen, erwartete durchschnittliche Antriebsleistungen des Fahrzeugs, die mindestens eine bestimmte Wetterbedingung, die mindestens eine gewünschte Innenraumtemperatur,
- ein thermisches Modell verwendet, in dem für jeden der langen Streckenabschnitte dem Antriebssystem des Fahrzeugs, der elektrischen Energiespeichervorrichtung, dem Fahrzeuginnenraum und der Umgebung außerhalb des Fahrzeugs eine durchschnittliche Temperatur und eine thermische Kapazität zugewiesen werden, und thermisches Modell, in dem die Kalorien zwischen ihnen durch die Heiz- und/oder Kühlvorrichtung übertragen werden können,
- eine vereinfachte Optimierungsberechnung der thermischen Verluste aller Vorrichtungen auf den mehreren langen Streckenabschnitten durchführt, vorzugsweise auf der gesamten Strecke, wobei diese Berechnung die Summe der thermischen Verluste der elektrischen Energiespeichervorrichtung minimiert, vorzugsweise nur die thermischen Verluste der elektrischen Energiespeichervorrichtung,
- und als Ausgabe für jeden der mehreren langen Streckenabschnitte liefert:
- eine Information, die einen Zielwert der durchschnittlichen Temperatur und/oder der durchschnittlichen Temperaturänderung der elektrischen Energiespeichervorrichtung für jeden der langen Abschnitte repräsentiert,
- eine Information zur Vorauswahl bestimmter Nutzungsmodi der Heiz- und/oder Kühlvorrichtung aus allen möglichen Modi,
- eine Information, die eine durchschnittliche Temperatur des Antriebssystems des Fahrzeugs, der elektrischen Energiespeichervorrichtung und des Fahrzeuginnenraums repräsentiert, und
- eine Information, die einen Ladezustand der Batterie repräsentiert,
- einen als kurzfristige Steuerung bezeichneten Berechnungsunterprozess auf kurzen Streckenabschnitten, die kleiner als die langen Abschnitte sind, beispielsweise 10-mal kleiner:
- erhält als Eingabe Informationen, die die durchschnittliche erforderliche Antriebsleistung auf jedem der kurzen Abschnitte repräsentieren, und Informationen, die eine durchschnittliche Geschwindigkeit des Fahrzeugs und/oder eine Geschwindigkeitsänderung des Fahrzeugs auf jedem der kurzen Abschnitte repräsentieren,
- verwendet ein thermisches Modell, in dem für jeden der kurzen Streckenabschnitte dem Antriebssystem des Fahrzeugs, der elektrischen Energiespeichervorrichtung, dem Fahrzeuginnenraum und der Umgebung außerhalb des Fahrzeugs eine Information, die eine durchschnittliche Temperatur repräsentiert, und eine Information, die eine thermische Kapazität repräsentiert, zugewiesen werden, und thermisches Modell, in dem die Kalorien zwischen ihnen durch die Heiz- und/oder Kühlvorrichtung übertragen werden können,
- führt eine Optimierungsberechnung der thermischen Verluste auf den mehreren kurzen Streckenabschnitten durch, wobei diese Berechnung die Summe der thermischen Verluste der elektrischen Energiespeichervorrichtung, der Abweichung zwischen der Temperatur der elektrischen Energiespeichervorrichtung und festgelegten Temperaturpunkten der elektrischen Energiespeichervorrichtung und der Abweichung zwischen der Kabinentemperatur und festgelegten Kabinentemperaturpunkten minimiert, wobei jedem dieser drei Optimierungsparameter ein entsprechender Koeffizient zugewiesen wird,
- und liefert als Ausgabe für jeden der kurzen Streckenabschnitte
- eine Information zur Auswahl eines einzigen Nutzungsmodus der Heiz- und/oder Kühlvorrichtung aus allen möglichen Modi,
- eine Information über eine Heiz- oder Kühlleistungsstufe für die Heiz- und/oder Kühlvorrichtung.

2. Verfahren nach Anspruch 1, weiter umfassend einen maschinellen Lernunterprozess zum Korrigieren möglicher Abweichungen des als Überwachung bezeichneten Unterprozesses und/oder des als Steuerung bezeichneten Unterprozesses und ihrer jeweiligen Modelle im Vergleich zu gemessenen Werten, um die verwendeten Modelle zu korrigieren.

3. Verfahren nach Anspruch 1 oder 2, wobei das als Überwachung bezeichnete Verfahren wiederholt wird, beispielsweise wenn eine Abweichung zwischen gemessenen Temperaturwerten von einem oder mehreren unter den Temperaturen der elektrischen Speichervorrichtung, des Fahrzeugantriebssystems und des Innenraums und den gewünschten Zielwerten festgestellt wurde, wobei diese Abweichung beispielsweise größer als ein jeweiliger vorbestimmter Wert ist.

4. Verfahren nach einem der vorhergehenden Ansprüche, bei dem die Längen der langen Abschnitte nicht alle identisch sind und/oder die Längen der kurzen Abschnitte nicht alle identisch sind, wobei diese Längen beispielsweise in zurückgelegter Entfernung oder in Fahrzeit berechnet werden.

5. Verfahren nach einem der vorhergehenden Ansprüche, umfassend einen Unterprozess zur Steuerung von Aktoren der Heiz- und/oder Kühlvorrichtung des Fahrzeugs, der als Eingabe die Ausgaben des als kurzfristige Steuerung bezeichneten Berechnungsunterprozesses hat.

6. System zur thermischen Verwaltung eines Fahrzeugs, wobei das Fahrzeug vom Typ ist, der ein Antriebssystem des Fahrzeugs und eine elektrische Energiespeichervorrichtung umfasst, wobei das thermische Verwaltungssystem eine Heiz- und/oder Kühlvorrichtung vom Typ Wärmepumpe umfasst und konfiguriert ist, um das Antriebssystem des Fahrzeugs, die elektrische Energiespeichervorrichtung und den Fahrzeuginnenraum zu heizen und/oder zu kühlen, wobei die Heiz- und/oder Kühlvorrichtung nach Installation im Fahrzeug geeignet ist, Kalorien von und/oder zu jedem unter dem Antriebssystem des Fahrzeugs, der elektrischen Energiespeichervorrichtung, dem Fahrzeuginnenraum und der Umgebung außerhalb des Fahrzeugs zu übertragen, wobei das thermische Verwaltungssystem mindestens einen Speicher und mindestens einen Rechner umfasst, wobei der mindestens eine Speicher Berechnungsanweisungen umfasst, um das Verfahren zur thermischen Verwaltung nach einem der vorhergehenden Ansprüche auf dem mindestens einen Rechner durchzuführen.

7. Thermisches Verwaltungssystem nach dem vorhergehenden Anspruch, umfassend mindestens einen Temperatursensor, wobei das System konfiguriert ist, um mit dem mindestens einen Temperatursensor die Temperatur von einem oder mehreren unter den Temperaturen der elektrischen Speichervorrichtung, des Fahrzeugantriebssystems und des Innenraums zu messen und diese Temperaturinformationen an den mindestens einen Rechner zu übermitteln.

8. Fahrzeug, umfassend ein Antriebssystem des Fahrzeugs, eine elektrische Energiespeichervorrichtung und ein thermisches Verwaltungssystem nach Anspruch 6 oder 7.

9. Fahrzeug nach dem vorhergehenden Anspruch, wobei das Antriebssystem des Fahrzeugs mindestens teilweise elektrisch, sogar vollelektrisch ist.

10. Fahrzeug nach dem vorhergehenden Anspruch, wobei das Fahrzeug vom Typ Automobil ist.

## Claims

1. A thermal management method for a vehicle of the type comprising a vehicle traction system, an electrical energy storage device, and a heating and/or cooling device, of heat pump type, for heating and/or cooling the vehicle traction system, the electrical energy storage device and the passenger compartment of the vehicle, the heating and/or cooling device being capable of transferring calories to and/or from each of the vehicle traction system, the electrical energy storage device, the passenger compartment of the vehicle and the environment external to the vehicle, said thermal management method receives as input, at least:
- information about the vehicle journey, the journey being discretized into long sections and, for each long section, information representative of an average vehicle speed and information representative of an average road inclination,
- information representative of an average traction power of the vehicle on each of said long journey sections,
- information representative of at least one weather condition on each of said long journey sections,
- information representative of at least one desired passenger compartment temperature on each of said long journey sections, said thermal management method comprising several calculation sub-processes, the thermal management method being **characterized in that** said calculation sub-processes comprise:
- a calculation sub-process called long-term supervision over at least several of said long sections, preferably over the entire journey, which supervision sub-process:
- uses as input, for each of said long journey sections: the information of expected average speeds, expected average road inclinations, expected average traction powers of the vehicle, the at least one determined weather
condition, the at least one desired passenger compartment temperature,
- uses a thermal model in which for each of said long journey sections, the vehicle traction system, the electrical energy storage device, the passenger compartment of the vehicle and the environment external to the vehicle are assigned an average temperature and a thermal capacity, and thermal model in which calories can be transferred between them by the heating and/or cooling device,
- performs a simplified optimization calculation of the thermal losses of all devices on said several long journey sections, preferably over the entire journey, which calculation minimizes the sum of the thermal losses of the electrical energy storage device, preferably only the thermal losses of the electrical energy storage device,
- and provides as output, for each of said several long journey sections:
- information representative of a target value of average temperature and/or average temperature variation of the electrical energy storage device for each of said long sections,
- information for preselection of certain modes of use of the heating and/or cooling device among all possible modes,
- information representative of an average temperature of the vehicle traction system, the electrical energy storage device and the passenger compartment of the vehicle, and
- information representative of a battery charge state,
- a calculation sub-process called short-term control on short journey sections, smaller than said long sections, for example 10 times smaller:
- receives as input information representative of average traction power required on each of said short sections, and information representative of an average vehicle speed and/or a variation in vehicle speed on each of said short sections,
- uses a thermal model in which for each of said short journey sections, the vehicle traction system, the electrical energy storage device, the passenger compartment of the vehicle and the environment external to the vehicle are assigned information representative of an average temperature and information representative of a thermal capacity, and thermal model in which calories can be transferred between them by the heating and/or cooling device,
- performs an optimization calculation of thermal losses on said several short journey sections, which calculation minimizes the sum of the thermal losses of the electrical energy storage device, the difference between the temperature of the electrical energy storage device and set points of temperature of the electrical energy storage device and the difference between cabin temperature and set points of cabin temperature, by assigning to each of these three optimization parameters a respective coefficient,
- and provides as output, for each of said short journey sections
- information for selection of a single mode of use of the heating and/or cooling device among all possible modes,
- information of a heating or cooling power level for the heating and/or cooling device.

2. Method according to claim 1, further comprising a machine learning sub-process to correct possible drifts of the so-called supervision sub-process and/or the so-called control sub-process and their respective models with respect to measured values, so as to correct the models used.

3. Method according to claim 1 or 2, wherein the so-called supervision process is reiterated, for example if a discrepancy has been found between measured temperature values of one or more among the temperatures of the electrical storage device, the vehicle traction system and the passenger compartment, and the desired target values, this discrepancy being for example greater than a respective predetermined value.

4. Method according to any one of the preceding claims, in which the lengths of said long sections are not all identical and/or the lengths of said short sections are not all identical, these lengths being for example calculated in distance traveled or in travel time.

5. Method according to any one of the preceding claims, comprising a sub-process for controlling actuators of the vehicle heating and/or cooling device having as input the outputs of the so-called short-term control calculation sub-process.

6. Thermal management system of a vehicle, the vehicle being of the type comprising a vehicle traction system and an electrical energy storage device, the thermal management system comprising a heating and/or cooling device, of heat pump type, and configured to heat and/or cool the
vehicle traction system, the electrical energy storage device and the passenger compartment of the vehicle, the heating and/or cooling device being capable, after installation in the vehicle, of transferring calories to and/or from each of the vehicle traction system, the electrical energy storage device, the passenger compartment of the vehicle and the environment external to the vehicle, said thermal management system comprising at least one memory and at least one calculator, said at least one memory comprising calculation instructions to implement the thermal management method according to any one of the preceding claims on said at least one calculator.

7. Thermal management system according to the preceding claim, comprising at least one temperature sensor, the system being configured to measure with the at least one temperature sensor the temperature of one or more among the temperatures of the electrical storage device, the vehicle traction system and the passenger compartment, and to transmit this temperature information to said at least one calculator.

8. Vehicle comprising a vehicle traction system, an electrical energy storage device, and a thermal management system according to claim 6 or 7.

9. Vehicle according to the preceding claim, the vehicle traction system being at least partially electric, or even all-electric.

10. Vehicle according to the preceding claim, the vehicle being of automotive type.
